# EUROPEAN PATENT APPLICATION

(11) **EP 2 685 428 A1**
(43) Date of publication of application: **15.01.2014**
(21) Application number: 12755257.8
(22) Date of filing: 07.03.2012
(51) Int. Cl.: G07B 15/00, B60L 11/18, G06Q 50/10, G07F 15/00, H02J 7/00

(54) **CHARGE SERVICE SYSTEM, SERVER, AND CHARGE SERVICE METHOD**

(30) Priority: 08.03.2011 JP 2011050262
(71) Applicant: NEC Corporation, Tokyo 108-8001 (JP)
(72) Inventor: CHIHARA, Shinpei, Tokyo 108-8001 (JP)
(74) Representative: Betten & Resch
(86) International application number: PCT/JP2012/055820
(87) International publication number: WO 2012/121290

(57) **Abstract**

A charger 20 includes a charging unit 22 that charges a secondary battery of an EV 50, and a charger condition acquisition unit 23 that detects completion of a charging operation performed on the secondary battery and detects an operation relating to departure of the EV 50 from a charging space following the charging operation. A server apparatus 40 incudes a charger condition monitoring unit 45 that monitors a condition of the charger 20 upon reception of a notification from the charger 20 indicating that completion of the charging operation and the operation relating to departure of the EV 50 from the charging space have been detected, and a parking fee calculation unit 43 that calculates a parking time of the EV 50 on the basis of a timing at which completion of the charging operation is detected and a timing at which the operation relating to departure of the electric vehicle from the charging space is detected, and calculates a parking fee to be charged to a user on the basis of the parking time.

## Description

### BACKGROUND

The present invention relates to a charging service system, a server apparatus, and a charging service method for charging a secondary battery installed in an electric vehicle.

It is known that a larger amount of time is required to charge an electric vehicle (an EV hereafter) than to fill a gasoline vehicle with gas. Therefore, when a user charges an EV using a charger disposed in a service station, a gas station, or the like the user often moves to a location removed from a charging space during charging in order to kill time. In this case, a situation may arise in which the user does not immediately return to the charging space even when a charging operation is complete. Hence, the charger is left connected to the EV, and as a result, another user who wishes to charge an EV may be unable to do so. When this type of situation occurs frequently, a utilization rate of the charger deteriorates.

Patent Document 1 describes an example of a system for encouraging the user to return to the charging space quickly following completion of the charging operation. In the system described in Patent Document 1, an hourly parking fee is set at a low price while a charging operation is performed on an EV in a pay parking lot installed with a charger, but when the charging operation is complete, the hourly fee is set at a high price. Hence, when the EV is left in the parking lot after the charging operation is complete, the user must pay a relatively high parking fee, and therefore the user can be encouraged to return quickly in order to move the EV, with the result that the utilization rate of the charger improves.

Patent Document 1: Patent Publication JP-A-2010-119162

The system described in Patent Document 1 envisages a case in which a charger is disposed in a location providing a parking space at a cost. However, a charging space located in a service station, a gas station, or the like would not normally be used as a parking space, and is not therefore provided with means for confirming the start and end of parking and so on. Hence, a parking time cannot be measured, and as a result, a fee cannot be charged in accordance with the parking time.

### SUMMARY

It is therefore an exemplary object of the present invention to make it possible to charge a fee on the basis of a parking time of an EV following completion of a charging operation even in a charging space located in an existing service station, gas station, or the like, where means for confirming the start and end of parking is not provided.

A charging service system according to the present invention includes a charger that charges a secondary battery installed in an electric vehicle, and is provided with: a charging unit that charges the secondary battery; a charger condition acquisition unit that detects completion of a charging operation performed on the secondary battery and detects an operation relating to departure of the electric vehicle from a charging space following the charging operation; a charger condition monitoring unit that monitors a condition of the charging unit upon reception of a notification from the charger condition acquisition unit indicating that completion of the charging operation and the operation relating to departure of the electric vehicle from the charging space have been detected; and a parking fee calculation unit that calculates a parking time of the electric vehicle on the basis of a timing at which completion of the charging operation is detected and a timing at which the operation relating to departure of the electric vehicle from the charging space is detected.

According to an exemplary aspect of the present invention, billing processing based on the parking time can be performed even in a location not provided with means for confirming parking and departure, such as a charging space located in a service station, a gas station, or the like, and therefore a user can be encouraged to move an EV quickly following completion of the charging operation. As a result, a utilization rate of the charger can be improved.

### DESCRIPTION OF DRAWINGS

Fig. 1 is a block diagram showing a configuration of a charging service system according to an embodiment of the present invention;
Fig. 2 is a view showing an example of a configuration of a user information DB according to this embodiment of the present invention;
Fig. 3 is a view showing an example of a configuration of a billing information DB according to this embodiment of the present invention;
Fig. 4 is a view showing an example of a configuration of a charger information DB according to this embodiment of the present invention;
Fig. 5 is a sequence diagram showing an operation of the charging service system according to this embodiment of the present invention;
Fig. 6 is a flowchart showing an operation of a control unit of a charger according to this embodiment of the present invention;
Fig. 7 is a flowchart showing an operation of a charger condition monitoring unit of a server apparatus according to this embodiment of the present invention; and
Fig. 8 is a time chart showing the operation of the charging service system according to this embodiment of the present invention.

### EXEMPLARY EMBODIMENT

Next, an exemplary embodiment of the present invention will be described in detail with reference to the drawings.

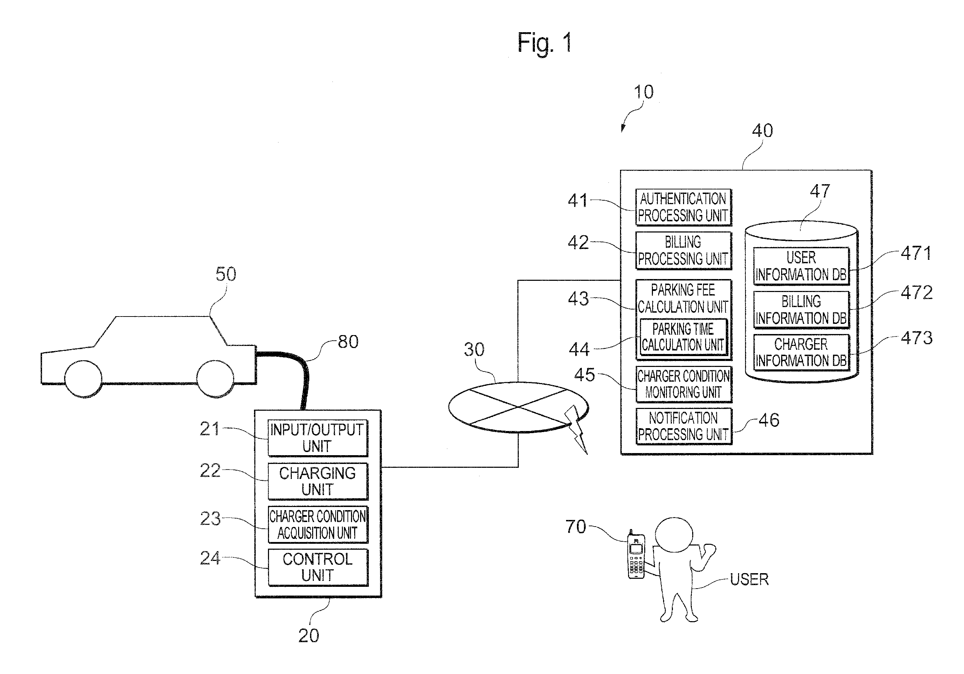

Fig. 1 is a block diagram showing a configuration of a charging service system 10 according to this embodiment of the present invention. As shown in the drawing, the charging service system 10 includes a charger 20 that performs charging on an EV 50, and a server apparatus 40 connected to the charger 20 via a network 30.

The charger 20 includes an input/output unit 21, a charging unit 22, a charger condition acquisition unit 23, and a control unit 24.

The input/output unit 21 is a device having an input/output function such as a touch panel display or an IC card reader/writer, and includes information input functions for receiving user operations, reading member cards, and so on, and information output functions for outputting operation results, authentication results, and so on.

The charging unit 22 has a function for performing charging on the EV 50, which is connected thereto via a charging cable 80.

The charger condition acquisition unit 23 has a function for obtaining a condition of the charger 20, including whether or not the EV 50 is connected to the charger 20 via the charging cable 80 and whether or not charging is underway.

The control unit 24 has a function for controlling an operation of the charger 20 on the basis of a user operation and an instruction from the server apparatus 40.

The server apparatus 40 includes an authentication processing unit 41, a billing processing unit 42, a parking fee calculation unit 43, a charger condition monitoring unit 45, a notification processing unit 46, and a storage unit 47. A specialized or general-purpose computer having a CPU, memory such as a ROM and a RAM, an external storage apparatus for storing various types of information, an input interface, an output interface, a communication interface, and a bus linking these components may be applied to the server apparatus 40. The server apparatus 40 may be constituted by a single computer or a plurality of computers connected to each other via a communication line.

The authentication processing unit 41, the billing processing unit 42, the parking fee calculation unit 43, the charger condition monitoring unit 45, and the notification processing unit 46 correspond to functional modules that are realized by having the CPU execute a predetermined program stored in the ROM or the like. The storage unit 47 is realized by the external storage apparatus.

The authentication processing unit 41 has a function for determining whether or not a user using the charger 20 is an affiliate user of a charging service.

The billing processing unit 42 has a function for determining a fee to be charged to the user on the basis of a charging use result of the charger 20 and a parking time of the EV in a charging space following a charging operation.

The parking fee calculation unit 43 includes a parking time calculation unit 44, and has a function for calculating an additional fee to be charged to the user on the basis of the parking time of the EV following the charging operation, which is calculated by the parking time calculation unit 44.

The charger condition monitoring unit 45 has a function for monitoring the condition of the charger 20 on the basis of a notification from the charger 20.

The notification processing unit 46 has a function for providing a mobile terminal 70 of the user with information relating to the charging service by email or SMS (Short Message Service).

The storage unit 47 stores databases in which the information relating to the charging service is accumulated. The databases include a user information DB 471 that stores information relating to users using the charging service, a billing information DB 472 that stores information used to bill the users, and a charger information DB 473 that stores information relating to the condition of the charger.

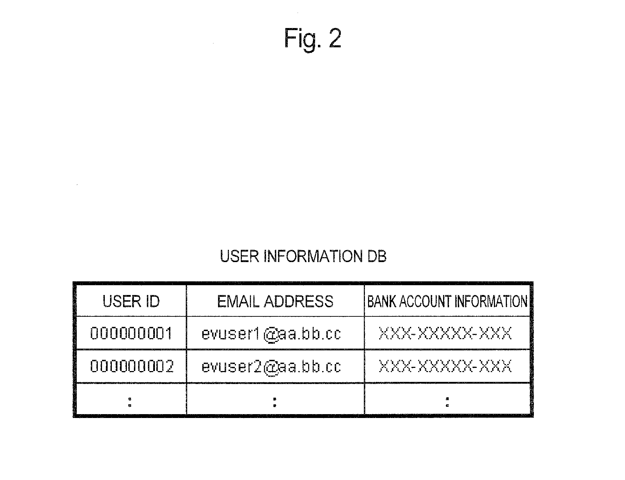

Fig. 2 is a view showing an example of a configuration of the user information DB 471. The user information DB 471 stores a "User ID", which is information for identifying a user, an "Email Address" used to transmit information to the mobile terminal 70, and "Bank Account Information" including information such as a bank account number required to bill the user for an accumulated fee.

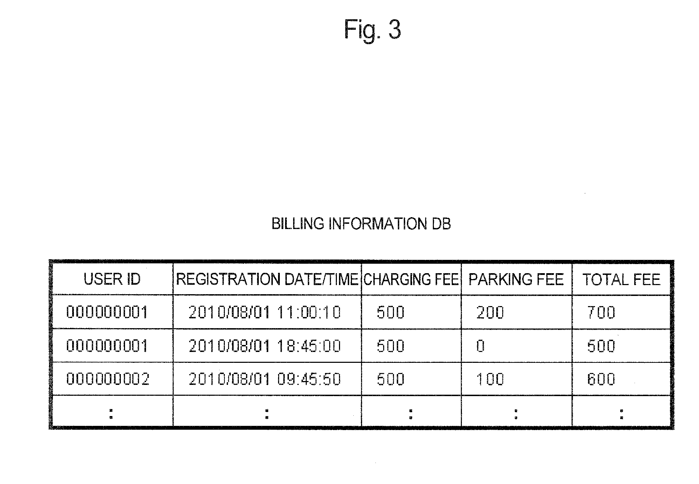

Fig. 3 is a view showing an example of a configuration of the billing information DB 472. The billing information DB 472 stores the "User ID", a data "Registration Date/Time", a "Charging Fee" corresponding to a fee for a single charging operation, a "Parking Fee" corresponding to a fee accumulated on the basis of the amount of time the EV 50 is left following the charging operation, and a "Total Fee", which is a sum of the charging fee and the parking fee

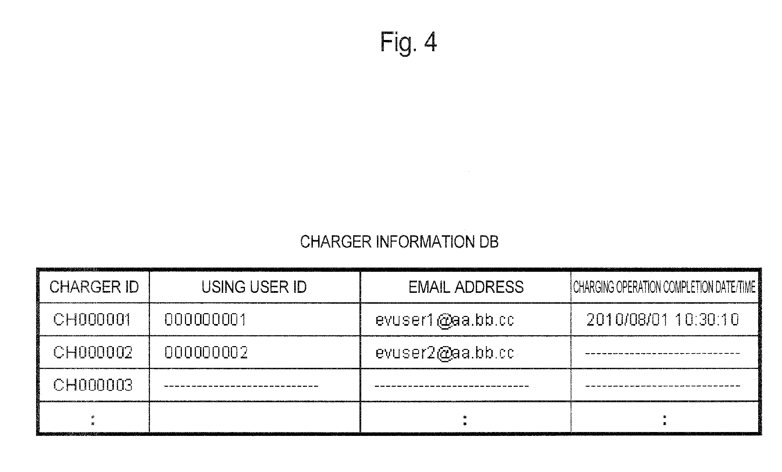

Fig. 4 is a view showing an example of a configuration of the charger information DB 473. The charger information DB 473 stores a "Charger ID", which is information for identifying each charger, a "Using User ID", which is information for identifying a user using a corresponding charger, an "Email Address" for transmitting emails to the using user, and a "Charging Operation Completion Date/Time" indicating a completion time of the charging operation.

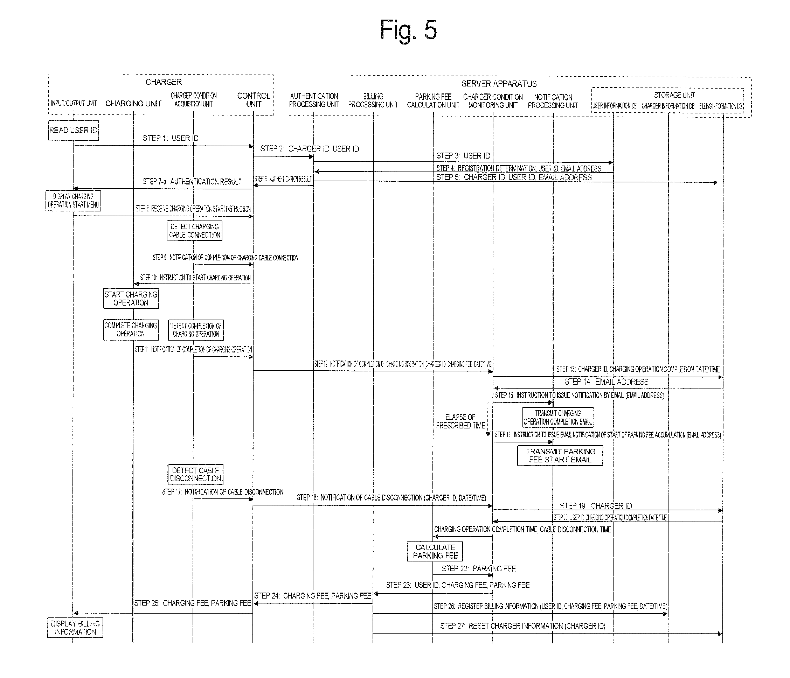

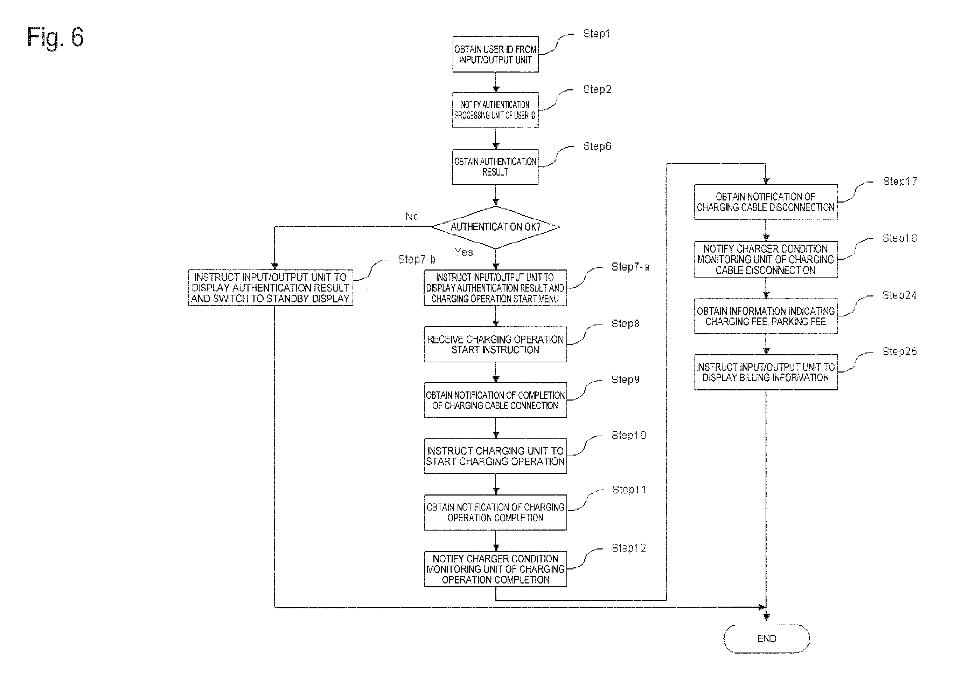

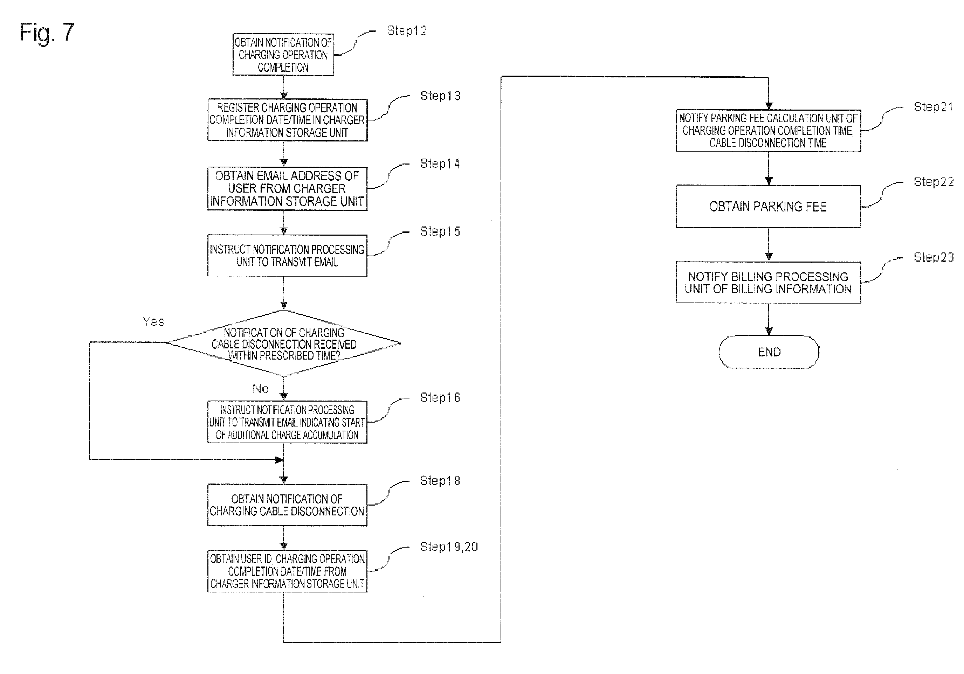

Next, using Figs. 5 to 7, an operation of the charging service system 10 will be described. Fig. 5 is a sequence diagram showing the operation of the charging service system 10. Fig. 6 is a flowchart showing an operation of the control unit 24 of the charger 20. Fig. 7 is a flowchart showing an operation of the charger condition monitoring unit 45 of the server apparatus 40.

First, when a user performs an operation to have the charger 20 read information on a member card, the input/output unit 21 reads a user ID recorded on the member card and notifies the control unit 24 thereof (Step 1). Next, the control unit 24 notifies the authentication processing unit 41 in the server apparatus 40 of the user ID (Step 2).

The authentication processing unit 41 searches the user information DB 471 using the provided user ID as a key to confirm whether or not the user is registered (Step 3). When the user ID is registered, the authentication processing unit 41 obtains the user ID and the email address from the user information DB 471 (Step 4).

Further, the authentication processing unit 41 registers the using user ID and the email address in association with the charger ID of the charger 20 stored in the charger information DB 473 (Step 5). Next, the authentication processing unit 41 transmits "Notification OK" to the control unit 24 of the charger 20 as an authentication result (Step 6).

Next, the control unit 24 of the charger 20 displays a message indicating that authentication is complete together with a charging operation start menu via the input/output unit 21 (Step 7-a). When the user selects "Start Charging Operation" from the displayed menu, the control unit 24 is notified that a user instruction has been received (Step 8).

After receiving notification from the charger condition acquisition unit 23 that connection of the EV 50 to the charging cable 80 has been detected (Step 9), the control unit 24 transmits a charging operation start instruction to the charging unit 22 (Step 10), whereupon the charging unit 22 starts a charging operation.

When the user ID is not registered in Step 4, an authentication result indicating an authentication failure is transmitted to the control unit 24 of the charger 20 in Step 6. After receiving notification of the authentication failure, the control unit 24 displays the authentication result via the input/output unit 21, instructs the input/output unit 21 to switch to a standby screen displayed when waiting for the next user, and then terminates the processing (Fig. 6: Step 7-b).

When charging processing by the charging unit 22 is complete, the charger condition acquisition unit 23 detects completion of the charging operation and notifies the control unit 24 thereof (Step 11). The control unit 24 then notifies the charger condition monitoring unit 45 in the server apparatus 40 of the charger ID, the charging fee, and the charging operation completion date and time (Step 12). Note that the charging fee may be a sum calculated on the basis of an amount of power or an amount of time required for the charging operation, or a fixed sum determined in advance for each charger 20 or each user. There are no limitations on a method of calculating the sum.

Next, the charger condition monitoring unit 45 registers the charging operation completion date and time in association with the charger ID of the charger 20 stored in the charger information DB 473 (Step 13). Further, the charger condition monitoring unit 45 obtains the email address of the using user ID corresponding to the charger ID (Step 14). Next, the charger condition monitoring unit 45 instructs the notification processing unit 46 to transmit an email indicating that the charging operation is complete to the obtained email address (Step 15), whereupon the notification processing unit 46 transmits the email to the mobile terminal 70 of the user.

Next, when the user disconnects the EV 50 from the charging cable 80, the charger condition acquisition unit 23 of the charger 20 detects this operation and notifies the control unit 24 thereof (Step 17). A method of detecting that the charging cable 80 has been returned to a storage holder using a sensor or the like attached to the holder, a method of transmitting a control signal from the EV 50 to the charger 20 periodically while the EV 50 is connected to the charging cable 80 and determining that the EV 50 has been disconnected from the charging cable 80 when the control signal is interrupted, or the like may be used as a method of detecting that the EV 50 has been disconnected from the charging cable 80. Alternatively, a method such as attaching a sensor to the periphery of a connector that is operated by the user to connect the EV 50 to the charging cable 80 and determining that the charging cable 80 has been disconnected when an operation of the connector is detected following completion of the charging operation may be applied.

When disconnection of the charging cable 80 is confirmed in Step 17, the control unit 24 notifies the charger condition monitoring unit 45 of the charger ID and the date and time (Step 18). Note that when the processing of Step 18 is not executed even after the elapse of at least a prescribed time following Step 15, the control unit 24 instructs the notification processing unit 46 to transmit an email indicating that parking fee accumulation has begun to the email address provided in Step 15 (Step 16), whereupon the notification processing unit 46 transmits an email indicating the start of parking fee accumulation to the mobile terminal 70 of the user.

Following the processing of Step 17 and Step 18, the charger condition monitoring unit 45 obtains the user ID of the using user and the charging operation completion date and time registered in association with the charger ID from the charger information DB 473 (Step 19, Step 20). The charger condition monitoring unit 45 then notifies the parking fee calculation unit 43 of the charging operation completion date and time and the cable disconnection date and time obtained in Step 18 (Step 21). After receiving this information, the parking fee calculation unit 43 calculates the parking time using the parking time calculation unit 44, then calculates the parking fee from a product of the parking time and a predetermined parking fee per unit time, and notifies the charger condition monitoring unit 45 thereof (Step 22).

Next, the charger condition monitoring unit 45 notifies the billing processing unit 42 of the user ID, the parking fee, and the charging fee (Step 23). The billing processing unit 42 transmits the obtained information to the control unit 24 of the charger 20 (Step 24), whereupon the control unit 24 instructs the input/output unit 21 to display billing information on the basis of this information (Step 25). Further, the billing processing unit 42 registers the user ID, the charging fee, the parking fee, and a sum of the parking fee and the charging fee in the billing information DB 472 (Step 26). Finally, the billing processing unit 42 resets the charger information registered in the charger information DB 473 by deleting the using user ID, email address, and charging operation completion date and time corresponding to the charger ID (Step 27).

It is assumed that processing for actually paying the charging fee and the parking fee is performed at a later date on the basis of the fee registered in the billing information DB 472 in Step 26 and the bank account information in the user information DB 471 by means of withdrawal from the bank account of the user, credit card payment, or the like.

Further, in this embodiment, the authentication processing is performed on the basis of the pre-registered user information and the payment processing is performed on the basis of the information registered in the billing information DB 472, but the charger 20 may be provided with a function enabling payment by cash or electronic money so that the user can pay directly using cash, electronic money, or the like. In this case, advance registration of the user information and the authentication processing of Step 1 to Step 7-a (b) may be omitted. Furthermore, in this case, the user may register an email address for receiving notifications via the input/output unit 21 of the charger 20 at the start of use of the charger 20. Alternatively, the notification processing may be omitted, and instead, an estimated charging operation completion time and an estimated parking fee accumulation start time calculated from a remaining charge of the EV 50 may be displayed at the start of the charging operation.

Moreover, in this embodiment, preparation for starting the EV 50 following completion of the charging operation is determined to be complete when disconnection of the EV 50 from the charging cable 80 is detected, and at this point, parking fee accumulation is terminated. However, the billing processing may be terminated when the user returns to the charger 20 following completion of the charging operation, for example. More specifically, parking fee accumulation may be terminated when the user returns to the charger 20 and performs an operation such as having the input/output unit 21 of the charger 20 read the member card.

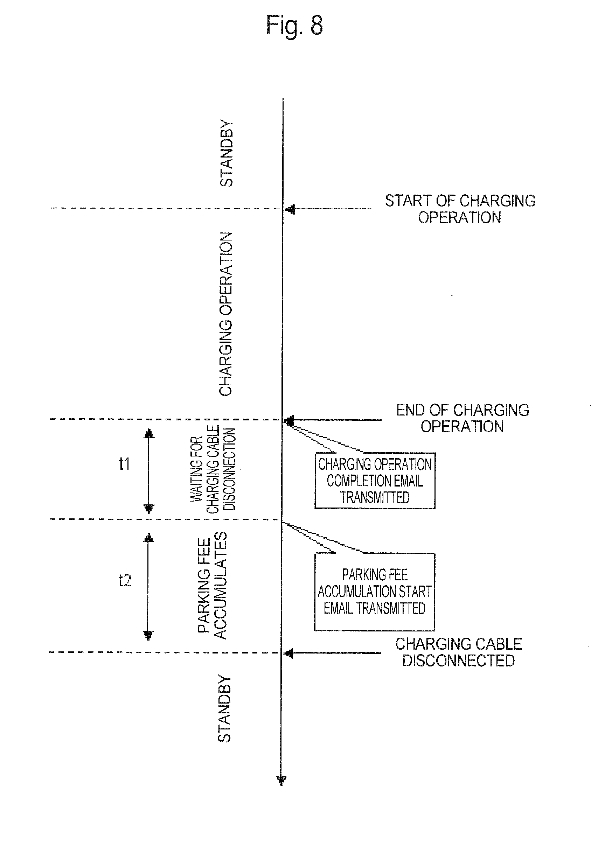

Fig. 8 is a time chart of the operation performed by the charging service system 10. As shown in Fig. 8, the user is notified that the charging operation is complete by email immediately after completion of the charging operation. Parking fee accumulation starts at a point following the elapse of a prescribed time t1 after the email has been transmitted. At this time, the user is notified by email that a parking fee will be charged. Parking fee accumulation is terminated at a point where the user returns and disconnects the charging cable, whereupon the billing processing is performed to calculate the parking fee on the basis of an elapsed time t2 from completion of the charging operation to disconnection of the charging cable. Note that in this embodiment, parking fee accumulation starts and the processing for notifying the user thereof is performed after the elapse of a prescribed time following completion of the charging operation, but these processes may be performed simultaneously with completion of the charging operation.

According to this embodiment, as described above, preparation for moving the EV 50 is determined to be complete when disconnection of the EV 50 from the charging cable 80 is detected following completion of the charging operation, and at this point, the accumulated parking fee is calculated. Hence, billing processing based on the parking time can be performed even in a location not provided with means for confirming parking and departure, such as a charging space located in a service station, a gas station, or the like. Therefore, the user can be encouraged to move the EV quickly following completion of the charging operation, and as a result, a situation in which the EV remains parked for a long time while connected to the charger following completion of the charging operation can be prevented from occurring. Accordingly, the utilization rate of the charger can be improved.

Note that in this embodiment, the charger 20 and the server apparatus 40 are connected via the network 30, but the charger 20 and the server apparatus 40 may be constituted by a single apparatus.

This application claims priority based on Japanese Patent Application No. 2011-50262 filed on March 8, 2011, the entire disclosure of which is incorporated herein.

The present invention was described above with reference to an embodiment thereof, but the present invention is not limited to the above embodiment, and various modifications that could be understood by a person skilled in the art may be implemented in relation to the configurations and details of the present invention within the scope of the present invention.

The above embodiment may be described partially or entirely as in the following notes, but is not limited thereto.

### (Note 1)

A charging service system including a charger that charges a secondary battery installed in an electric vehicle, including:
a charging unit that charges the secondary battery;
a charger condition acquisition unit that detects completion of a charging operation performed on the secondary battery and detects an operation relating to departure of the electric vehicle from a charging space following the charging operation;
a charger condition monitoring unit that monitors a condition of the charging unit upon reception of a notification from the charger condition acquisition unit indicating that completion of the charging operation and the operation relating to departure of the electric vehicle from the charging space have been detected; and
a parking fee calculation unit that calculates a parking time of the electric vehicle on the basis of a timing at which completion of the charging operation is detected and a timing at which the operation relating to departure of the electric vehicle from the charging space is detected.

### (Note 2)

The charging service system according to Note 1, wherein the parking fee calculation unit calculates a parking fee to be charged to a user on the basis of the parking time.

### (Note 3)

The charging service system according to Note 1 or 2, wherein the parking fee calculation unit calculates the parking time from a time at which completion of the charging operation is detected.

### (Note 4)

The charging service system according to Note 1 or 2, wherein the parking fee calculation unit calculates the parking time following the elapse of a predetermined time after completion of the charging operation is detected.

### (Note 5)

The charging service system according to any of Notes 1 to 4, wherein the parking fee calculation unit calculates the parking time from a time at which the operation relating to departure of the electric vehicle from the charging space is detected.

### (Note 6)

The charging service system according to any of Notes 1 to 5, wherein the operation relating to departure of the electric vehicle from the charging space is an operation to disconnect the electric vehicle from a charging cable of the charger.

### (Note 7)

The charging service system according to any of Notes 1 to 5, wherein the operation relating to departure of the electric vehicle from the charging space is an operation to store a charging cable of the charger in a storage holder.

### (Note 8)

The charging service system according to any of Notes 1 to 5, wherein the operation relating to departure of the electric vehicle from the charging space is an operation to input predetermined information into the charger.

### (Note 9)

A server apparatus connected via a communication network to a charger that charges a secondary battery installed in an electric vehicle, including:
a charger condition monitoring unit that monitors a condition of the charger upon reception of a notification from the charger indicating that completion of a charging operation and an operation relating to departure of the electric vehicle from a charging space have been detected; and
a parking fee calculation unit that calculates a parking time of the electric vehicle on the basis of a timing at which completion of the charging operation is detected and a timing at which the operation relating to departure of the electric vehicle from the charging space is detected.

### (Note 10)

A charging service method for charging a secondary battery installed in an electric vehicle, including the steps of:
detecting completion of a charging operation performed on the secondary battery by a charger;
detecting an operation relating to departure of the electric vehicle from a charging space following the charging operation; and
calculating a parking time of the electric vehicle on the basis of a timing at which completion of the charging operation is detected and a timing at which the operation relating to departure of the electric vehicle from the charging space is detected.

According to the present invention, billing processing based on a parking time can be performed even in a location not provided with means for confirming parking and departure, such as a charging space located in a service station, a gas station, or the like, and therefore a user can be encouraged to move an EV quickly following completion of a charging operation. Hence, the present invention can be used to achieve an improvement in a utilization rate of a charger.

- 10: charging service system
- 20: charger
- 21: input/output unit
- 22: charging unit
- 23: charger condition acquisition unit
- 24: control unit
- 30: network
- 40: server apparatus
- 41: authentication processing unit
- 42: billing processing unit
- 43: parking fee calculation unit
- 44: parking time calculation unit
- 45: charger condition monitoring unit
- 46: notification processing unit
- 47: storage unit
- 50: EV
- 70: mobile terminal
- 80: charging cable
- 471: user information DB
- 472: billing information DB
- 473: charger information DB

## Claims

1. A charging service system including a charger that charges a secondary battery installed in an electric vehicle, comprising:
a charging unit that charges the secondary battery;
a charger condition acquisition unit that detects completion of a charging operation performed on the secondary battery and detects an operation relating to departure of the electric vehicle from a charging space following the charging operation;
a charger condition monitoring unit that monitors a condition of the charging unit upon reception of a notification from the charger condition acquisition unit indicating that completion of the charging operation and the operation relating to departure of the electric vehicle from the charging space have been detected; and
a parking fee calculation unit that calculates a parking time of the electric vehicle on the basis of a timing at which completion of the charging operation is detected and a timing at which the operation relating to departure of the electric vehicle from the charging space is detected.

2. The charging service system according to claim 1, wherein the parking fee calculation unit calculates a parking fee to be charged to a user on the basis of the parking time.

3. The charging service system according to claim 1 or 2, wherein the parking fee calculation unit calculates the parking time from a time at which completion of the charging operation is detected.

4. The charging service system according to claim 1 or 2, wherein the parking fee calculation unit calculates the parking time following the elapse of a predetermined time after completion of the charging operation is detected.

5. The charging service system according to any of claims 1 to 4, wherein the parking fee calculation unit calculates the parking time from a time at which the operation relating to departure of the electric vehicle from the charging space is detected.

6. The charging service system according to any of claims 1 to 5, wherein the operation relating to departure of the electric vehicle from the charging space is an operation to disconnect the electric vehicle from a charging cable of the charger.

7. The charging service system according to any of claims 1 to 5, wherein the operation relating to departure of the electric vehicle from the charging space is an operation to store a charging cable of the charger in a storage holder.

8. The charging service system according to any of claims 1 to 5, wherein the operation relating to departure of the electric vehicle from the charging space is an operation to input predetermined information into the charger.

9. A server apparatus connected via a communication network to a charger that charges a secondary battery installed in an electric vehicle, comprising:
a charger condition monitoring unit that monitors a condition of the charger upon reception of a notification from the charger indicating that completion of a charging operation and an operation relating to departure of the electric vehicle from a charging space have been detected; and
a parking fee calculation unit that calculates a parking time of the electric vehicle on the basis of a timing at which completion of the charging operation is detected and a timing at which the operation relating to departure of the electric vehicle from the charging space is detected.

10. A charging service method for charging a secondary battery installed in an electric vehicle, comprising the steps of:
detecting completion of a charging operation performed on the secondary battery by a charger;
detecting an operation relating to departure of the electric vehicle from a charging space following the charging operation; and
calculating a parking time of the electric vehicle on the basis of a timing at which completion of the charging operation is detected and a timing at which the operation relating to departure of the electric vehicle from the charging space is detected.
